# EUROPÄISCHE PATENTSCHRIFT

(11) **EP 0 463 008 B1**
(45) Veröffentlichungstag und Bekanntmachung des Hinweises auf die Patenterteilung: **10.11.1993**
(21) Anmeldenummer: 90904240.0
(22) Anmeldetag: 17.03.1990
(51) Int. Cl.: G01N 29/04

(54) **VERFAHREN UND VORRICHTUNG ZUR ULTRASCHALLPRÜFUNG LANGGESTRECKTER, PRISMATISCHER PROFILE MIT MINDESTENS EINER IN PROFILLÄNGSRICHTUNG VERLAUFENDEN, EBENEN MANTELFLÄCHE**
PROCESS AND DEVICE FOR ULTRASONIC TESTING OF ELONGATED, PRISMATIC PROFILES WITH AT LEAST ONE PLANE OUTER SURFACE EXTENDING IN THE LONGITUDINAL DIRECTION OF THE PROFILE
PROCEDE ET DISPOSITIF POUR L'ESSAI ULTRASONIQUE DE PROFILES PRISMATIQUES ALLONGES AVEC AU MOINS UNE SURFACE EXTERIEURE PLANE S'ETENDANT DANS LE SENS LONGITUDINAL DU PROFILE

(30) Priorität: 18.03.1989 DE 3908967
(43) Veröffentlichungstag der Anmeldung: 02.01.1992
(73) Patentinhaber: KRAUTKRÄMER GmbH & Co., D-50354 Hürth (DE)
(72) Erfinder: KARBACH, Bernhard, D-5042 Erftstadt-Friesheim (DE); PRAUSE, Reinhard, D-5205 St. Augustin (DE); WEBER, Heinrich, D-5253 Lindlar-Frielingsdorf (DE)
(74) Vertreter: Bauer, Wulf, Dr.
(86) Internationale Anmeldenummer: DE9000204
(87) Internationale Veröffentlichungsnummer: WO9011516

(56) Entgegenhaltungen:
- FR-A- 2 311 279
- US-A- 3 533 281
- US-A- 3 746 972
- US-A- 3 952 582

## Beschreibung

Die Erfindung bezieht sich auf ein Verfahren zur Ultraschallprüfung langgestreckter, prismatischer Profile nach dem Obergriff des Patentanspruchs 1 sowie auf eine Vorrichtung zur Durchführung des Verfahrens nach dem Oberbegriff des Patentanspruchs 5.

Das Verfahren und die Vorrichtung der eingangs genannten Art ist aus der FR-A-2 311 279 bekannt. Eine zufriedenstellende Aussage über Fehlerfreiheit im gesamten Profilquerschnitt ist mit diesem Verfahren und mit dieser Vorrichtung nicht möglich.

Die Prüfung langgestreckter, prismatischer Profile erfolgt allgemein nicht mit Rotationsprüfmaschinen der eingangs genannten Art, sondern bei reiner Translationsbewegung zwischen Prüfkopfträger und dem zu prüfenden Profil.

Dabei wird im allgemeinen nur ein geringer Teil der gesamten Querschnittsfläche des Profils geprüft, zumeist wird mit einem Zentralstrahl die Profilmitte erfaßt, weil dort die Wahrscheinlichkeit, Fehlstellen anzutreffen, relativ groß ist. Eine zufriedenstellende Aussage über die Fehlerfreiheit im gesamten Profilquerschnitt und damit im gesamten Volumen wird jedoch auf diese Weise nicht erreicht und ist bei dem Verfahren nach dem Stand der Technik mit hohem Aufwand verbunden, da für jede ebene Mantelfläche ein Satz von Prüfköpfen vorgesehen werden muß und Profile unterschiedlicher Geometrie oder unterschiedlicher Abmessungen jeweils eine vollständige Umstellung der Prüfanlage notwendig machen. Ein derartiges Verfahren ist jedoch kosten- und arbeitsintensiv.

Unter langgestreckten, prismatischen Profilen werden Körper verstanden, deren Länge deutlich größer ist als die Abmessungen im Bereich der Querschnittsfläche und deren Querschnittsfläche über die gesamte Länge konstant ist. Aus der Preis kommen im wesentlichen Anforderungen zur Prüfung von Vierkant- und Sechskantmaterial in Form von Vollmaterial, das Verfahren und die Vorrichtung der eingangs genannten Art sind jedoch auch für Rohrmaterial und Stäbe mit anderen Querschnitten, beispielsweise Walzprofile, stranggepreßte Aluminiumprofile, Kunststoffprofile und dergleichen einsetzbar.

Ausgehend von dem Verfahren und der Vorrichtung der eingangs genannten Art hat sich die Erfindung die Aufgabe gestellt, den Anteil des geprüften Volumens bei langgestreckten, prismatischen Profilen deutlich zu erhöhen und die Arbeiten beim Umstellen und Erfassen unterschiedlicher Profile erheblich zu verringern.

Diese Aufgabe wird ausgehend von dem Verfahren der eingangs genannten Art gelöst durch die Merkmale des Patentanspruchs 1 sowie vorrichtungsmäßig gelöst durch eine Vorrichtung mit den Merkmalen des Patentanspruchs 5.

Durch dieses Verfahren sowie die nach diesem Verfahren arbeitende Vorrichtung wird erreicht, daß jeder einzelnen ebenen Mantelfläche ausreichend viele Prüfköpfe zugeordnet sind, deren Zentralstrahlen bei einmaligem Umlauf des Rotors ein (unsichtbares) Punkt- bzw. Strichmuster der Einschallpunkte auf der ebenen Mantelfläche beschreiben, wobei die Punkte bzw. die strichförmigen, aus mehreren Punkten gebildeten kurzen Meßspuren sich mehr oder weniger regelmäßig über die Breite der ebenen Mantelfläche erstrecken und insbesondere auch in den Randbereichen dieser Mantelfläche vorliegen. Einen einzelnen Punkt beschreibt der Zentralstrahl eines Prüfkopfes dann, wenn pro Erscheinen (also pro Umlauf) der betrachteten ebenen Mantelfläche lediglich ein Sendeimpuls ausgelöst wird. Im allgemeinen werden jedoch mehrere Sendeimpulse pro Erscheinen der Mantelfläche ausgelöst, dies führt zu einer kurzen, im wesentlichen strichförmigen, aus Punkten gebildeten und auf einer nahezu schraubenlinienförmigen Abwicklungslinie liegenden Prüfspur. Bei jedem Umlauf und damit bei jedem Erscheinen der betrachteten, ebenen Mantelfläche vor den Prüfköpfen wird wieder ein derartiges Punkt- bzw. Strichmuster beschrieben, jedoch aufgrund der zwischenzeitlich erfolgten Weiterbewegung an versetzten Stellen. Jedem Punkt bzw. aus Punkten zusammengesetzten Strich entspricht eine Prüfzone im hinter der betrachteten, ebenen Mantelfläche befindlichen Volumen des zu prüfenden Profils. Da die Prüfung bei jeder ebenen Mantelfläche, die das Profil begrenzt, durchgeführt werden kann, ist bei normalen Profilen, beispielsweise mit rechteck- oder sechseckförmigem Querschnitt, eine vollständige Prüfung des gesamten Profils erreichbar.

Im Gegensatz zu Prüfanlagen für rotationssymmetrische Prüfstücke werden die Prüfköpfe bei dem erfindungsgemäßen Verfahren bzw. der entsprechenden Vorrichtung nur ausgelöst, wenn die mindestens eine ebene Mantelfläche des Profils innerhalb eines gewissen Winkelbereichs zum betrachteten Prüfkopf steht. Dies wird durch die Einrichtung zur Erfassung des Winkels zwischen Rotor und Profil und die Steuereinheit ermöglicht. Letztere gibt in Abhängigkeit vom gemessenen Winkel die Prüfköpfe nur dann frei, wenn die gewünschte Winkellage zwischen der mindestens einen ebenen Mantelfläche und dem jeweiligen Prüfkopf vorliegt.

Das Verfahren bzw. die Vorrichtung geben zwei unterschiedliche Lösungen für die Anordnung der Prüfköpfe, diese können quer verschiebbar und/oder winkeleinstellbar sein.

Die quer verschiebbaren Prüfköpfe sind zumeist in Profillängsrichtung hintereinander im Rotor angeordnet. Sie werden so gestaffelt justiert, daß die Zentralstrahlen aller Prüfköpfe Punkte auf der mindestens einen einen Mantelfläche beschreiben, die möglichst gleichmäßig über die Breite (eventuell in Schrägstellung) der Mantelfläche verteilt sind. Dabei können die einzelnen Prüfköpfe parallel zueinander ausgerichtet sein, so daß der vorgegebene Winkelbereich für alle Prüfköpfe gleichzeitig auftritt. Es ist auch möglich, die Prüfköpfe auf unterschiedlichen Radiallinien anzuordnen und quer zur jeweiligen Radiallinie zu verschieben, dann tritt der vorgegebene Winkelbereich zu unterschiedlichen Zeitpunkten, nämlich unterschiedlichen Winkelpositionen des Rotors für die einzelnen Prüfköpfe auf.

Bei winkeleinstellbaren Prüfköpfen tritt der vorgegebene Winkelbereich für jeden einzelnen Prüfkopf im allgemeinen bei unterschiedlichen Drehpositionen des Rotors auf. Geht man beispielsweise von einem vorgegebenen Winkelbereich von ca. 90° aus, so arbeitet ein Prüfkopf, der auf einer Radiallinie ausgerichtet ist, immer dann, wenn die mindestens eine, ebene Mantelfläche im wesentlichen rechtwinklig zu dieser Radiallinie steht. Schwenkt man nun diesen Prüfkopf um einen Winkel von beispielsweise 5°, so wird die 90°-Bedingung bei einem unterschiedlichen Drehzustand des Rotors erreicht, der sich vom ersten betrachteten Drehzustand um etwa 5° unterscheidet. Dann trifft jedoch der Zentralstrahl des betrachteten Prüfkopfes nicht mehr denselben Punkt der ebenen Mantelfläche, sondern einen seitlich versetzten Punkt. Durch unterschiedliche Winkelstellung der einzelnen Prüfköpfe können wiederum Auftreffpunkte bzw. -striche, die über die Breite der betrachteten Mantelfläche vorzugsweise gleichmäßig verteilt sind, beschrieben werden, so daß wiederum eine vollständige Volumenprüfung erzielbar ist.

Ein großer Vorteil der erfindungsgemäßen Vorrichtung liegt darin, daß sie auch zur Prüfung von Rundmaterial eingesetzt werden kann. Es handelt sich also im wesentlichen um eine Universalanlage.

Nun ist zwar aus der DE-OS 25 57 062 bekannt, bei der Ultraschallprüfung von Flossenrohren einen Rotor zu verwenden und die Prüfköpfe immer dann auszuschalten, wenn ihre Prüfstrahlen im Bereich der Flossen liegen, es handelt sich bei diesem vorbekannten Verfahren jedoch im wesentlichen um ein modifiziertes Verfahren zur Prüfung von Rohren bzw. Rundmaterial mit dem Unterschied, daß die Prüfung unterbrochen wird, wenn die Flossen sich im Bereich der Prüfköpfe befinden. Das vorbekannte Verfahren macht also entscheidend davon Gebrauch, daß Flossenrohre im wesentlichen aus rohrähnlichen, rotationssymmetrischen Querschnittsbereichen bestehen und die Flossen als Störung angesehen werden können. Derartige Verhältnisse liegen bei der Prüfung allgemeiner, langgestreckter, prismatischer Profile nicht vor. Das vorbekannte Verfahren läßt sich daher nicht auf die Prüfung derartiger Profile übertragen.

Als sehr vorteilhaft hat es sich erwiesen, zur Erfassung des Winkels zwischen dem Rotor und dem Profil die spiegelnde Reflexion mindestens eines der Prüfköpfe an der ebenen Mantelfläche heranzuziehen. Auf diese Weise kann genau erfaßt werden, wann zwischen dem Zentralstrahl des betrachteten Prüfkopfes und der ebenen Mantelfläche ein rechter Winkel vorliegt. Dabei muß weder die Winkelstellung des Rotors gemessen noch eine präzise Einlaufführung des zu prüfenden Profils eingesetzt werden. Das aus der spiegelnden Reflexion eines Prüfkopfes gewonnene Echosignal kann benutzt werden, um die anderen Prüfköpfe zu triggern, andererseits können die anderen Prüfköpfe selbst ihren jeweiligen Zustand spiegelnder Reflexion erfassen und das erhaltene Signal für die eigene Triggerung nutzen. Aus den Signalen für spiegelnde Reflexion können unmittelbar Triggersignale abgeleitet werden, es ist jedoch auch möglich, diese Signale zeitlich zu verzögern oder in einem Rechner aufzubereiten und den jeweiligen Drehwinkel des Rotors um das zu prüfende Profil zu jedem Zeitpunkt zu ermitteln. Auf diese Weise kann die Profillage erkannt werden. Wird in bevorzugter Weiterbildung mit Zeittoren gearbeitet und wird dem reflektierten Echo ein erstes (früheres) Zeittor sowie dem Fehlererwartungsbereich ein zweites (späteres) Zeittor zugeordnet, so kann mit demselben Meßimpuls (Schuß) sowohl der Zustand spiegelnder Reflexion als auch eine tatsächliche Prüfung durchgeführt werden. Durch Erfassen der spiegelnd reflektierten Echos entsteht daher für die Prüfung des Profils kein Nachteil.

In einer anderen Ausbildung kann jedoch auch eine Einrichtung zur Erfassung des Winkels zwischen Rotor und Profil verwendet werden, wie sie aus der bereits genannten DE-OS 25 57 062 bekannt ist. Es handelt sich im wesentlichen um eine Winkelkodierung des Drehwinkels des Rotors und eine winkelpräzise Einlaufführung des zu prüfenden Profils. Durch eine zugeordnete Steuereinheit werden die einzelnen Prüfköpfe jeweils nur dann freigegeben, wenn die vorgegebenen Winkelbereiche zwischen dem einzelnen Prüfkopfes und der ebenen Mantelfläche vorliegen.

Die Erfindung ist nicht beschränkt auf senkrecht in die jeweils betrachtete Mantelfläche einstrahlende Prüfköpfe, vielmehr können auch Winkelprüfköpfe Verwendung finden. Ebenso können Breitstrahlprüfköpfe eingesetzt werden. Die Ausmessung geometrischer Daten kann insbesondere auch die Prüfung der Schlüsselweite des betrachteten Profils beinhalten, es können aber auch andere geometrische Daten erfaßt werden, die Erfassung ist davon abhängig, daß reflektierende Begrenzungsflächen vorliegen.

Schließlich kann das erfindungsgemäße Verfahren dahingehend weiterentwickelt werden, daß die zugeordnete Prüfmaschine mittels des Rechners die Form und die Abmessung eines beliebigen zu prüfenden Profils selbst erkennt. Die senkrechte Position des zentralen Prüfstrahls eines Prüfkopfes zu einer ebenen Mantelfläche wird über das reflektierte Signal erfaßt. Zusätzlich können weitere, an anderen Winkelpositionen des Rotors angeordnete Prüfköpfe ihrerseits entsprechende Signale für spiegelnde Reflexion liefern. Ist zusätzlich ein Sensor vorhanden, der pro komplettem Umlauf des Rotors ein Signal abgibt, beispielsweise für die 0°-Position, so kann aus den anfallenden Daten die allgemeine Profilform ermittelt werden. Erfaßt man zudem den Zeitpunkt, an dem das reflektierte Echo nach Aussenden des Schallimpulses aufgenommen wird, so kann auch über die geometrischen Abmessungen eines beliebigen Profils eine Aussage getroffen werden. Insbesondere einfache Profile, beispielsweise quadratische oder sechseckige Profile können auf diese Weise einfach erkannt werden.

Aufgrund der Prüfung mit einem Rotor wird eine wesentlich verbesserte Volumenprüfung des zu prüfenden Profils erreicht und lassen sich die eingesetzten Prüfköpfe wesentlich besser ausnutzen, d. h. es können pro Zeiteinheit von jedem Prüfkopf wesentlich mehr Schüsse abgegeben werden, als dies bei dem Verfahren nach dem Stand der Technik der Fall ist.

Weitere Vorteile und Merkmale der Erfindung ergeben sich aus den übrigen Ansprüchen sowie der nun folgenden Beschreibung von nicht einschränkend zu verstehenden Ausführungsbeispielen, die unter Bezugnahme auf die Zeichnung im folgenden näher erläutert werden. In der Zeichnung zeigen:
- Fig. 1: ein Schnittbild für den Prinzipaufbau einer Rotationsprüfanlage für Profile mit mindestens einer, in Profillängsrichtung verlaufenden, ebenen Mantelfläche,
- Fig. 2: ein Schnittbild entlang der Schnittlinie II - II in Fig. 1,
- Fig. 3: eine Prinzipdarstellung bei einer Ansicht entsprechend Fig. 2 mit quer verschiebbaren Prüfköpfen,
- Fig. 4: eine Draufsicht auf die den Prüfköpfen zugewandte ebene Mantelfläche entsprechend einem Schnitt entlang der Linie IV - IV in Fig. 3,
- Fig. 5: eine Darstellung entsprechend Figur 3, jedoch für winkeleinstellbare Prüfköpfe,
- Fig. 6: eine Draufsicht auf die den Prüfköpfen zugewandte, ebene Mantelfläche in Figur 5 und
- Fig. 7: ein typisches Echobild bei Senkrechteinschallung und Senkrechtstellung eines Prüfkopfes.

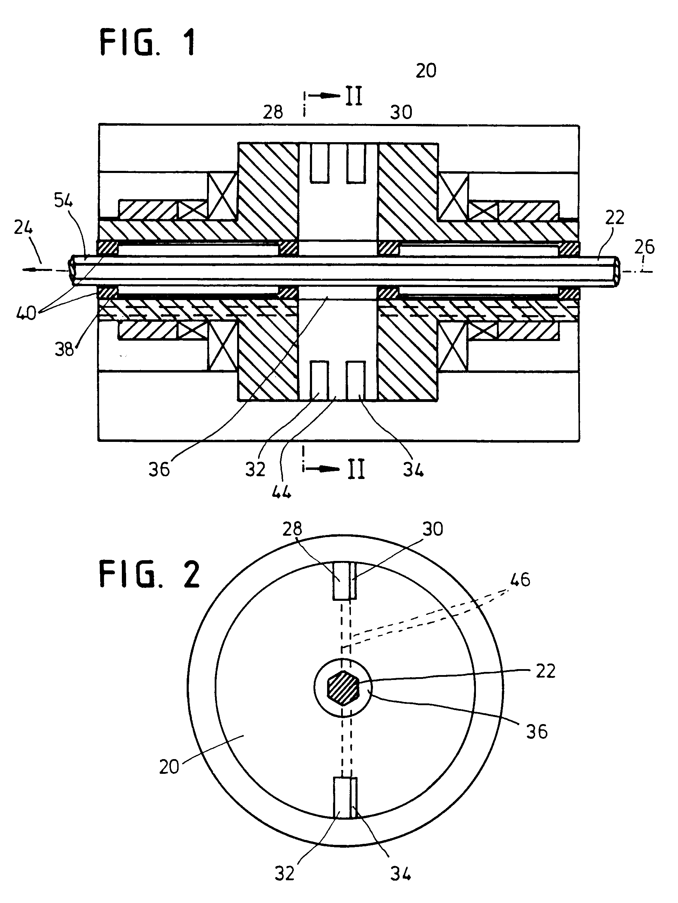

Im Ausführungsbeispiel nach den Figuren 1 und 2 ist ein Rotor 20 einer Rotationsprüfmaschine gezeigt, durch den ein Prüfstück in Form eines langgestreckten, prismatischen Profils 22 mit Sechskant-Vollquerschnitt im Sinne der Pfeile 24 hindurchbewegt wird. Der Rotor 20 dreht sich um eine Profillängsrichtung 26 des Profils 22. Im Rotor sind mehrere Prüfköpfe 28, 30, 32 und 34 angeordnet, die mit ihren Zentralstrahlen auf das zu prüfende Profil 22 gerichtet sind. Der Rotor 20 bildet in bekannter Weise eine Ankopplungskammer 36 aus, die mit Wasser gefüllt ist, wodurch eine Schallankopplung zwischen den Prüfköpfen und dem Profil 22 erreicht wird. Seitlich ist die Ankopplungskammer 36 durch einen linken und einen rechten Dichtungssatz 38 abgeschlossen, beide Dichtungssätze sind längliche, rohrförmige Gebilde, die an ihren Enden die eigentlichen Dichtungen 40 tragen. Die Dichtungssätze 38 werden, wie das Profil 22, nicht gedreht. Ihre Dichtungen 40 haben einen Ausschnitt, der der Form des Profils 22 entspricht, das Profil 22 kann in Richtung des Pfeiles 24 gegenüber dem Dichtungssatz 38 bewegt werden. Auf diese Weise wird die Abdichtung der Translationsbewegung erzielt. Die Abdichtung der Rotationsbewegung erfolgt zwischen dem Außenmantel der Dichtungssätze und dem entsprechenden Innenmantel des Rotors.

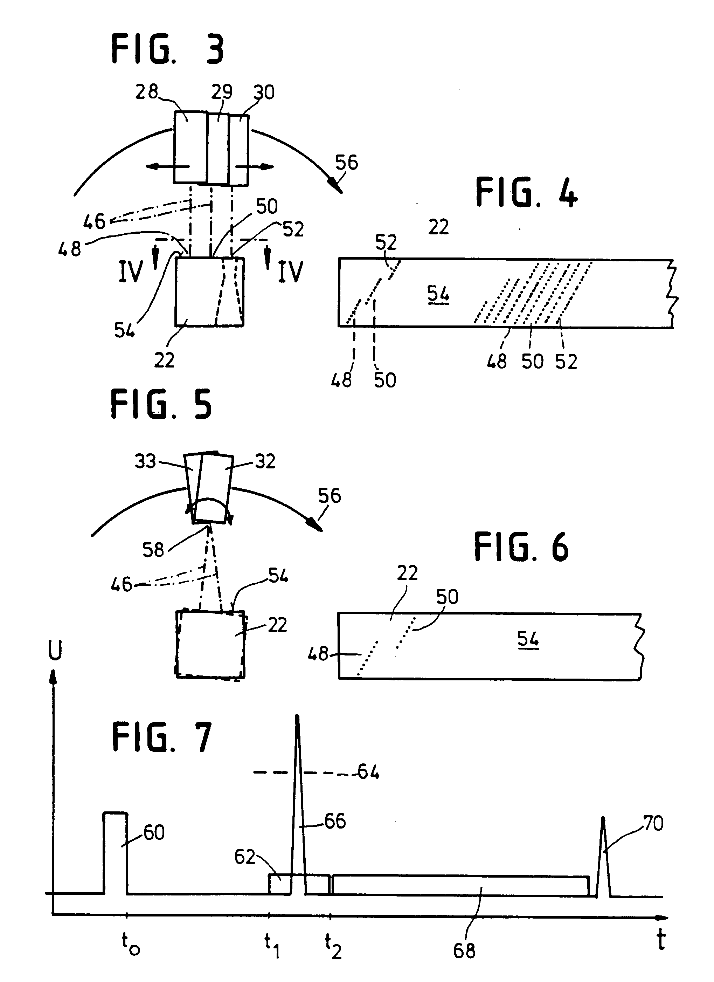

Jeweils zwei Prüfköpfe 28, 30 und 32, 34 sind in einem Prüfkopfträger angeordnet, der wiederum Bestandteil des Rotors 20 ist. Die Prüfköpfe 28 bis 34 können innerhalb des Prüfkopfträgers seitlich verschoben werden in der Zeichenebene der Figur 2. Aus letzterer ist ein seitlicher Versatz der Prüfkopfpaare jedes Prüfkopfträgers 44 ersichtlich. Dadurch sind die Zentralstrahlen 46 der beiden Prüfköpfe jedes Prüfkopfpaares seitlich versetzt und laufen parallel zueinander, wie dies aus Figur 2 ersichtlich ist. Die entsprechenden Zusammenhänge sind jedoch besser aus den Figuren 3 und 4 ersichtlich, auf die im folgenden eingegangen wird:

Fig. 3 zeigt drei in Richtung der Profillängsrichtung 26 hintereinander angeordnete Prüfköpfe 28, 29, 30, die in einer Ebene quer zueinander versetzt sind, die eine Radialebene des Rotors 24 ist, also rechtwinklig zur Profillängsrichtung 26 steht. Die einzelnen Prüfköpfe 28, 29, 30 stehen parallel zueinander, dadurch verlaufen auch ihre Zentralstrahlen 46 parallel, jedoch im Abstand des Versatzes zueinander. Sie treffen in Schalleintrittspunkten 48, 50, 52 auf eine ebene Mantelfläche 54 des Profils 22. Aufgrund der Drehbewegung des Rotors 20, die durch den Pfeil 56 angedeutet ist, ändert sich die Winkellage der Zentralstrahlen 46 zur ebenen Mantelfläche 54 ständig. In Figur 3 ist der momentane Zustand gezeigt, bei dem die Zentralstrahlen 46 senkrecht zur ebenen Mantelfläche 54 stehen. Gestrichelt ist in Figur 3 weiterhin für den rechten Prüfkopf 30 der Verlauf einer Prüfzone innerhalb der Querschnittsfläche des Profilstücks 22 gezeigt. Sie entspricht einem Schuß des Prüfkopfes 30.

Die Prüfköpfe 28, 29, 30 werden angesteuert und geben Schallimpulse ab, wenn ihre Zentralstrahlen in einem gewissen Winkelbereich zur ebenen Mantelfläche 54 stehen, beispielsweise 90° +/- 5°. Das aus den Prüfköpfen 28 bis 30 austretende Schallfeld hat eine gewisse Divergenz, hierdurch wird bereits ein Echo für spiegelnde Reflexion des Zentralstrahls an der ebenen Mantelfläche 54 erreicht, wenn die Prüfköpfe 28 bis 30 5° vor der in Figur 3 gezeigten Position und in Gegenrichtung zum Pfeil 56 stehen. Um dies erfassen zu können, sendet zumindestens einer der Prüfköpfe 28 bis 30 ständig ein Signal aus und ist ständig auf Empfang für ein spiegelnd reflektiertes Signal geschaltet. Die Auswertung von Fehlerechos ist jedoch abgeschaltet. Sobald die beschriebene 5°-Position vor der in Figur 3 gezeigten Stellung erreicht ist, was durch das ansteigende Signal für spiegelnde Reflexion erfaßt wird, wird die Auswerteschaltung freigegeben und nun innerhalb der nächsten 10° Drehwinkel des Rotors 20 auf Fehler geprüft (bzw. die Geometrie erfaßt). Die sich dabei ergebende Punktfolge der einzelnen, periodisch abgegebenen Schüsse der Prüfköpfe 28 bis 30 macht sich auf der ebenen Mantelfläche 54 in Form von (nicht sichtbaren) Schalleintrittspunkten bemerkbar, die strichförmig sind und für die drei Prüfköpfe 28 bis 30 parallel versetzt verlaufen. Der linke Teil der Figur 4 zeigt die erhaltenen Schalleintrittspunkte 48 bis 52 bei einem Umlauf, also einem Erscheinen der ebenen Mantelfläche 54. Da diese jedoch mit jedem Umlauf wieder erscheint, ergibt sich als Folge des kombinierten Lineartransportes des Profiles 22 und des umlaufenden Rotors 20 ein Muster der Schalleintrittspunkte bei mehreren Umdrehungen, wie dies rechts in Figur 4 angedeutet ist. Insgesamt wird eine vollständige Volumenprüfung erreicht, jedem Schalleintrittspunkt entspricht eine Prüfzone, wie sie in Figur 3 gestrichelt angedeutet ist. Durch den seitlichen Versatz der Prüfköpfe 28 und 30 wird erreicht, daß auch die Randzonen des Profils 22, das hier quadratischen (Querschnitt hat, geprüft werden. Dabei ist die Anordnung so getroffen, daß das Profil 22 mit jeder Umdrehung des Rotors um eine Strecke weitertransportiert wird, die dem Versatz zwischen zwei Prüfköpfen 28, 29 bzw. 29, 30 entspricht. Dadurch wird die Überlappung der Prüfspuren erzielt, wie sie aus Figur 4, rechts ersichtlich ist.

Im Ausführungsbeispiel nach den Figuren 5 und 6 sind zwei Prüfköpfe 32, 33 gezeigt, die um eine Achse 58 unabhängig voneinander schwenkbar angeordnet sind. Im Ausführungsbeispiel nach Fig. 5 sind die beiden Prüfköpfe 32, 33 so justiert, daß sie in einem Winkel von + 7° bzw. -7° zu einer Radialen versetzt sind. Dies hat zur Folge, daß die Schalleintrittspunkte 48, 50 nicht auf der Mitte der ebenen Mantelfläche 54, sondern links und rechts, bzw. in Fig. 6 oben und unten versetzt erscheinen. Die entsprechenden, strichförmigen, kurzen Prüfspuren, die sich aus einer Vielzahl von Schalleintrittspunkten zusammensetzen, sind in Fig. 6 angedeutet, sie entsprechen der Darstellung gemäß Fig. 4, jedoch mit dem Unterschied, daß nur zwei Prüfköpfe vorliegen.

Im Momentbild, das in Fig. 5 festgehalten ist, stehen die beiden Zentralstrahlen 46 der beiden Prüfköpfe 32, 33 nicht senkrecht zur ebenen Mantelfläche 54. Bei Weiterführung der Drehung im Sinne des Pfeils 56 tritt jedoch für den hinteren Prüfkopf 33 der Zustand senkrechten Einfalls seines Zentralstrahls 46 auf die ebene Mantelfläche 54 ein. Dies ist in Fig. 5 für den vorderen Prüfkopf 32 und ein entsprechend um 7° gedrehtes Profil 22, das gestrichelt eingezeichnet ist, gezeigt. Aus dieser Darstellung läßt sich auch ableiten, daß der Schalleintrittspunkt während der Drehbewegung des Rotors 20 auf der ebenen Mantelfläche 54 wandert, wie dies durch die Punktmuster in den Figuren 4 und 6 dargestellt ist.

Der entscheidende Unterschied zu Rohrprüfanlagen nach dem Stand der Technik besteht also darin, daß die Prüfelektronik nur eingeschaltet wird, wenn ein vorgegebener Winkelbereich zwischen den Prüfköpfen und der ebenen Mantelfläche 54 vorliegt. In den hier beschriebenen Ausführungsbeispielen sind die Prüfköpfe, zumindestens ein Prüfkopf, ständig angesteuert und senden Schallimpulse aus, diese werden jedoch nur ausgewertet hinsichtlich spiegelnder Reflexion, wenn ein Signal für spiegelnde Reflexion vorliegt, wird die Prüfelektronik eingeschaltet und erfolgt eine Prüfung.

Die elektrischen Vorgänge sind anhand von Fig. 7, in der der Verlauf der Spannung U über der Zeit t für einen kompletten Schuß dargestellt ist, ersichtlich. Zu einem Zeitpunkt t0 wird ein Sendeimpuls 60 ausgelöst. Zwischen den Zeitpunkten t1 und t2 befindet sich eine Blende 62 für die Schalleintrittsanzeige spiegelnder Reflexion. Wird innerhalb dieser Blende 62 ein Signal erfaßt, das einen Schwellenwert 64 überschreitet, wie das Signal 66, so befindet sich der betrachtete Prüfkopf innerhalb des vorgegebenen Winkelbereichs und innerhalb eines Divergenzbereichs im Zustand spiegelnder Reflexion. Beim Durchlaufen des Zustandes spiegelnder Reflexion steigt das Signal 66 zunächst an, bis es den Schwellenwert 64 überschreitet, es steigt dann weiter an bis der Zentralstrahl im Winkel von 90° zur ebenen Mantelfläche 54 steht, danach fällt es wieder ab und fällt anschließend wieder unter den Wert des Schwellenwertes 64. Solange das Signal 66 oberhalb des Schwellenwertes 64 ist, erfolgt eine Prüfung. In dieser Zeit werden Signale, die sich innerhalb einer Fehlerblende 68 befinden, verarbeitet. Liegt das Signal 66 unterhalb des Schwellenwertes 64, erfolgt keine Auswertung von Signalen, die innerhalb der Fehlerblende 68 auftauchen. Das Signal 70 ist ein Rückwandecho, wie es bei den Anordnungen gemäß der Figuren 3 und 5 typischerweise auftritt. Die Figur 7 läßt erkennen, daß eine dünne Oberflächenschicht unterhalb der ebenen Mantelfläche 54 und eine entsprechende Oberflächenschicht im Bereich der parallelen Rückwand ungeprüft bleiben.

Anstelle der beschriebenen Erfassung der Relativwinkellage zwischen den Prüfköpfen und dem Profil 22 durch spiegelnde Reflexion kann auch der Drehwinkel des Rotors 20 über geeignete Vorrichtungen, wie sie beispielsweise in der genannten DE-OS 25 57 062 beschrieben sind, erfaßt werden. Die Ansteuerung der Prüfköpfe 28 bis 34 erfolgt dann innerhalb der Winkelbereiche, in denen der vorgegebene Winkelbereich zwischen den Zentralstrahlen 46 und der ebenen Mantelfläche 54 vorliegt.

Wenn in den Ausführungsbeispielen lediglich senkrecht einstrahlende Prüfköpfe 28 bis 34 beschrieben sind, so bedeutet dies keine Einschränkung. Anstelle der gezeigten Prüfköpfe können auch Winkelprüfköpfe, Arrays, Breitstrahlprüfköpfe und andere Prüfköpfe eingesetzt werden. Das Verfahren eignet sich für beliebige Prüfköpfe, insbesondere SE-, Einkopf- und Mehrkopfbetrieb.

Das erfindungsgemäße Verfahren und die nach diesem Verfahren arbeitenden Vorrichtungen gestatten es, das Volumen eines Profils 22 hundertprozentig zu prüfen. Es sind bei den gängigen Profilen sämtliche Bereiche des Querschnitts erfaßbar. Die Minimalgröße von nachweisbaren Fehlern hängt lediglich davon ab, wie eng die einzelnen Schalleintrittspunkte 48 bis 52 nebeinander auf der ebenen Mantelfläche 54 liegen.

Es versteht sich, daß bei einem Profil 22 mit quadratischen Querschitt jede der vier Mantelflächen gleichberechtigt ist, so daß bei jeder Mantelfläche eine Prüfung stattfindet, wie sie oben beschrieben wurde. Gleiches gilt für andere Profilquerschnitte, beispielsweise ein Sechseck usw. Je höher die Anzähl der Ecken ist, umso größer ist die anteilige Zeitdauer, während der eine Prüfung stattfindet. Insofern kann ein Rundrohr oder ein Rundstab als Polygon mit unendlich vielen Ecken beschrieben werden, bei dem ständig das Signal 66 oberhalb des Schwellenwertes 64 liegt, so daß ständig eine Prüfung stattfindet. Demgemäß läßt sich die Vorrichtung zur Durchführung des Verfahrens für die Prüfung von Rundmaterial einsetzen.

## Patentansprüche

1. Verfahren zur Ultraschallprüfung langgestreckter, prismatischer Profile (22) mit mindestens einer in Profillängsrichtung verlaufenden, ebenen Mantelfläche (54), insbesondere Profilstäbe und -rohre, auf Materialfehler oder hinsichtlich ihrer geometrischen Daten, bei dem das zu prüfende Profil (22) von mehreren Prüfkopfen (28 bis 34) beschallt wird, die individuell verstellbar an einem Prüfkopfträger (44) in einem um die Profillängsrichtung (26) rotierenden Rotor (20) einer Rotationsprüfmaschine angeordnet sind und das Profil (22) in seiner Längsrichtung (26) relativ zum Prüfkopfträger (44) bewegt wird, dadurch gekennzeichnet, daß die Prüfköpfe (28 bis 34) entweder jeweils quer und vorzugsweise rechtwinklig zur Profillängsrichtung (26) und zur Richtung des Zentralstrahls (46) des jeweiligen Prüfkopfes (28 bis 34) so verschoben und/oder jeweils winkelverstellt werden um eine parallel zur Profillängsrichtung (26) verlaufende Schwenkachse (58) im Prüfkopfhalter (44), daß die Zentralstrahlen (46) der einzelnen Prüfköpfe (28 bis 34), gleichzeitig oder zu unterschiedlichen Zeitpunkten, nebeneinander auf die ebene Mantelfläche (54) auftreffen und nebeneinander liegende Prüfzonen im Volumen des Profils (22) bilden, und daß die Prüfung durch die Prüfköpfe (28 bis 34) individuell ausgelöst wird durch eine Einrichtung zur Erfassung des Winkels zwischen dem Rotor (20) und dem Profil (22) und die Prüfung jeweils nur dann stattfindet, wenn der Zentralstrahl (46) und die ebene Mantelfläche (54) in einem vorgegebenen Winkelbereich, beispielsweise 90° +/- 5°, zueinander stehen.

2. Verfahren nach Anspruch 1, dadurch gekennzeichnet, daß die Erfassung des Winkels zwischen Rotor (20) und der ebenen Mantelfläche (54) über die spiegelnde Reflexion mindestens eines Prüfkopfes (z. B. 28) an der ebenen Mantelfläche (54) erfolgt.

3. Verfahren nach Anspruch 1, dadurch gekennzeichnet, daß der Drehwinkel des Rotors (20) erfaßt wird und zusätzlich eine Einlaufführung für die Profile (22) vorgesehen ist und daß die Prüfung nur dann erfolgt, wenn aufgrund der Winkellage des Rotors (20) die Zentralstrahlen (46) im vorgegebenen Winkelbereich liegen.

4. Verfahren nach Anspruch 1 oder 2, dadurch gekennzeichnet, daß mindestens ein Prüfkopf ständig und periodisch Schallimpulse aussendet, daß die reflektierten Impulse empfangen und mittels einer Blende (62) für spiegelnd reflektierte Signale zeitlich und eines Schwellenwertes (64) bewertet werden und die Prüfung auf Fehler bzw. Geometrie nur stattfindet, solange innerhalb der Blende (62) ein Signal (66) oberhalb des Schwellenwertes (64) liegt.

5. Vorrichtung zur Durchführung des Verfahrens nach einem der Ansprüche 1 bis 4 zur Ultraschallprüfung langgestreckter, prismatischer Profile (22) mit mindestens einer in Profillängsrichtung (26) verlaufenden, ebenen Mantelfläche (54), insbesondere Profilstäbe und - rohre, auf Materialfehler oder hinsichtlich ihrer geometrischen Daten, mit mehreren, an einem Prüfkopfträger (44) eines Rotors (20) angeordneten, individuell verstellbaren Prüfköpfen (28 bis 34), die auf das zu prüfende Profil (22) gerichtet sind, wobei der Rotor (20) um die Profillängsrichtung (26) rotiert, und mit einer Transporteinrichtung für den Transport des Profils (22) in Profillängsrichtung (26) relativ zum Prüfkopfträger (44), dadurch gekennzeichnet, daß die Prüfköpfe (28 bis 34) entweder jeweils quer und vorzugsweise rechtwinklig zur Profillängsrichtung (26) und zur Richtung des Zentralstrahls (46) des jeweiligen Prüfkopfs (28 bis 34) verschiebbar und/oder jeweils winkelverstellbar um eine parallel zur Profillängsrichtung (26) verlaufende Schwenkachse (58) im Prüfkopfhalter (44) angeordnet sind, und daß eine Einrichtung zur Erfassung des Winkels zwischen dem Rotor (20) und dem Profil (22) vorgesehen ist, die mit einer Steuereinheit für das Ein- und Ausschalten der Prüfelektronik verbunden ist.

6. Vorrichtung nach Anspruch 5, dadurch gekennzeichnet, daß mindestens einem Prüfkopf (z. B. 28) eine Einrichtung zur ständig periodischen Ansteuerung und zum Aussenden von Schallimpulse zugeordnet ist, daß im Empfangskanal eine Blende (62) für spiegelnd reflektierte Signale (66) vorgesehen ist, daß eine Schwellenwertschaltung vorgesehen ist, die in diese Blende (62) fallende Signale (66) erfaßt, und daß eine Fehlerblende (68) für Fehlersignale vorgesehen ist, eine Fehlerauswertung jedoch nur stattfindet, wenn das in die Blende (62) fallende Signal (66) oberhalb des Schwellenwertes (64) liegt.

## Claims

1. Process for ultrasonic testing of elongated, prism-shaped sections (22) with at least one plane outer surface (54) extending along the longitudinal axis (26) of the section (22), in particular bar sections and tubes, to detect material defects or to verify the geometric data of the sections, wherein the section (22) to be tested is exposed to ultrasonic beams from several ultrasonic probes (28 to 34) installed in a probe carrier (44), and is fed along its longitudinal axis (26) in relation to the probe carrier (44), characterised by the fact that the probe carrier (44) is installed in the rotor (20) of a rotary testing machine which rotates around the longitudinal axis (26) of the section (22); and by the £act that the probes (28 to 34) are installed in the probe carrier (44) so that they can be displaced individually, either transversely or, preferably, at right angles to the longitudinal axis (26) of the section (22) and the direction of the probe and/or so that their angular position can be adjusted individually by swivelling them around a swivel axis (58) running parallel to the longitudinal axis (26) of the section (22); and by the fact that the individual probes (28 to 34) are adjusted so that the central beams (46) emitted by each probe (28 to 34) impinge upon the plane outer surface (54) adjacent to one another, either simultaneously or at different times , thus forming adjacent scanning zones in the volume of the section (22); and by the fact that the probes (28 to 34) are activated individually by an arrangement for determining the angle between the rotor (20) and the section (22); and by the fact that testing is only performed when the angle between the central beam (46) and the plane outer surface (54) lies within a predetermined range, e.g. 90° +/- 5°.

2. Process as claimed in Claim 1, characterized by the fact that the determination of the angle between the rotor (20) and the plane outer surface (54) is performed by means of the specular reflection of at least one probe (e.g. probe 28) from the plane outer surface (54).

3. Process as claimed in Claim 1, characterized by the fact that the angle of rotation of the rotor (20) is registered; and by the fact that a feed guide arrangement is provided for the sections (22); and by the fact that testing is only performed when, on the basis of the angular position of the rotor (20), the angle of the central beams (46) is found to lie within the predetermined range.

4. Process as claimed in Claim 1 or Claim 2, characterized by the fact that at least one probe emits sound impulses continuously and periodically; and by the fact that the reflected impulses are received and evaluated by means of an aperture (62) for specular reflection signals and a threshold value (64); and by the fact that testing for defects or geometry is only performed while a signal (66) above the threshold value (64) is registered within the aperture (62).

5. Device for the implementation of the process as claimed in any of Claims 1 through 4 for ultrasonic testing of elongated, prism-shaped sections (22) with at least one plane outer surface (54) extending along the longitudinal axis of the section (22), in particular bar sections and tubes, to detect material defects or to verify the geometric data of the sections. The device is provided with several ultrasonic probes (28 to 34) installed in a probe carrier (44) and directed towards the section (22) to be tested, and with a feed arrangement for transporting the section (22) along its longitudinal axis (26) in relation to the probe carrier (44). The device is characterized by the fact that the probe carrier (44) is installed in a rotor (20) which rotates around the longitudinal axis (26) of the section (22); and by the fact that the probes (28 to 34) are installed in the probe carrier (44) so that they can be displaced individually, either transversely or, preferably, at right angles to the longitudinal axis (26) of the section (22) and the direction of the probe and/or so that their angular position can be adjusted individually by swivelling them around a swivel axis (58) running parallel to the longitudinal axis (26) of the section (22); and by the fact that the an arrangement for determining the angle between the rotor (20) and the section (22) is provided, which is connected with a control unit for switching the testing electronics on and off.

6. Device as claimed in Claim 5, characterized by the fact that at least one probe (e.g. probe 28) is activated and emits ultrasonic impulses continuously and periodically; and by the fact that an aperture (62) for specular reflection signals (66) is provided in the reception channel; and by the fact that the signals (66) occurring within this aperture (62) are subject to a threshold switching arrangement; and by the fact that a defect aperture (68) for defect signals is provided; and by the fact that defect evaluation is only performed when the signal (66) occurring within the aperture (62) is lies above the threshold value (64).

## Revendications

1. Procédé pour l'essai ultrasonique de profilés (22) prismatiques allongés avec au moins une surface extérieure (54) plane s'étendant dans le sens longitudinal du profilé, notamment de barres et tuyaux profilés, quant à la présence de défauts de matériaux ou du point de vue de leurs caractéristiques géométriques, pour lequel le profilé à contrôler (22) est palpé par plusieurs palpeurs (28 à 34) qui sont disposés de manière individuellement réglable sur un support de palpeurs (44) dans le rotor (20) à rotation dans le sens longitudinal du profilé (26) d'une machine d'essais de rotation et pour lequel le profilé (22) est déplacé dans son sens longitudinal (26) de manière relative par rapport au support de palpeurs (44), caractérisé par le fait que les palpeurs (28 à 34) peuvent être déplacés transversalement et de préférence perpendiculairement au sens longitudinal du profilé (26) et en direction du faisceau central (46) du palpeur concerné (28 à 34) et/ou ajustés angulairement par rapport à un axe orientable (58) parallèle au sens longitudinal du profilé (26) dans le support de palpeurs (44), que les faisceaux centraux (46) des différents palpeurs (28 à 34) touchent les uns à côté des autres simultanément ou de façon décalée dans le temps la surface extérieure plane (54), qu'ils forment, toujours justaposés, des zones d'essais dans le volume du profilé (22), que l'essai effectué par les palpeurs (28 à 34) est individuellement déclenché par un dispositif de saisie de l'angle entre le rotor (20) et le profilé (22) et que cet essai a uniquement lieu si le faisceau central (46) et la surface extérieure plane (54) forment entre eux la plage angulaire spécifiée, par exemple 90° +/- 5°.

2. Procédé selon la revendication 1, caractérisé par le fait que la saisie de l'angle entre le rotor (20) et la surface extérieure plane (54) se fait par la réflexion-miroir d'au moins un palpeur (p. ex. 28) sur la surface extérieure plane (54).

3. Procédé selon la revendication 1, caractérisé par le fait que l'angle de rotation du rotor (20) est saisi et que, en plus, un guidage d'entrée pour les profilés (22) est prévu et que l'essai peu uniquement avoir lieu lorsque, en raison de la position angulaire du rotor (20), les faisceaux centraux (46) se trouvent dans la plage angulaire spécifiée.

4. Procédé selon la revendication 1 ou 2, caractérisé par le fait qu'au moins un palpeur émet constamment et périodiquement des impulsions sonores, que les impulsions réfléchies sont reçues et qu'elles sont évaluées par un diaphragme (62) pour les signaux à réflexion-miroir dans le temps et par une valeur-seuil (64) et que le contrôle d'éventuelles erreurs ou de la géométrie a uniquement lieu aussi longtemps que le diaphragme (62) dispose d'un signal (66) au-delà de la valeur-seuil (64).

5. Procédé pour la réalisation du procédé selon l'une des revendications 1 à 4 pour l'essai ultrasonique de profilés (22) prismatiques allongés avec au moins une surface extérieure (54) plane s'étendant dans le sens longitudinal du profilé (26), notamment de barres et tuyaux profilés, quant à la présence de défauts de matériaux ou du point de vue de leurs données géométriques, avec plusieurs palpeurs (28 à 34) à réglage individuel montés sur le support de palpeurs (44) d'un rotor (20), lesquels sont dirigés vers le profilé à contrôler (22), le rotor (20) étant en rotation autour du sens longitudinal du profilé (26), avec un dispositif de transport pour le transport du profilé (22) dans le sens longitudinal du profilé (26) de manière relative au support de palpeurs (44), caractérisé par le fait que les palpeurs (28 à 34) peuvent être décalés transversalement et de préférence perpendiculairement au sens longitudinal du profilé (26) et en direction du faisceau central (46) du palpeur concerné (28 à 34) et/ou ajustés angulairement par rapport à un axe orientable (58) parallèle au sens longitudinal du profilé (26) dans le support de palpeurs (44) et qu'un dispositif de saisie de l'angle entre le rotor (20) et le profilé (22) est prévu lequel est relié à une unité pour la mise en et hors service de l'électronique de l'essai.

6. Procédé selon la revendication 5, caractérisé par le fait qu'au moins un palpeur (p. ex. 28) dispose d'un dispositif pour l'excitation permanente et périodique ainsi que pour l'émission d'impulsions sonores, qu'un diaphragme (62) pour les signaux à réflexion-miroir (66) est prévu dans le canal de réception, qu'un circuit de valeur-seuil est prévu, lequel saisit les signaux (66) dans ce diaphragme (62) et qu'un diaphragme d'erreurs (68) est prévu pour les signaux erronés, une évaluation des erreurs n'ayant toutefois lieu que si le signal (66) dans le diaphragme (62) est au-delà de la valeur-seuil (64).
